# EUROPEAN PATENT APPLICATION

(11) **EP 1 713 238 A1**
(43) Date of publication of application: **18.10.2006**
(21) Application number: 05007889.8
(22) Date of filing: 11.04.2005
(51) Int. Cl.: H04M 1/05

(54) **Bluetooth telecommunication headphone with detachable battery module**

(71) Applicant: Singim International Corp., Shindian, Taipei County (TW)
(72) Inventor: Chen, I-Ming, Taipei Ctiy 116 (TW)
(74) Representative: Bucher, Ralf Christian

(57) **Abstract**

A Bluetooth telecommunication headphone with detachable battery module comprises a wireless headphone of Bluetooth telecommunication module and a battery module; wherein, the wireless headphone contains a casing and the electronic elements necessitated to a Bluetooth communication module while the casing has been mounted a recessed slot for a battery box with power supply contacts fitted in the recessed slot for a battery box and a power supply jack for external power connection at designated locations; the battery module has a battery box mated with the slot-recessed battery box to receive a lithium battery and a contact of power supply fitted at a selected location to be externally powered so that the said battery module can be embedded into the foregoing recessed slot of the battery box and combined with the casing to integrally form the Bluetooth telecommunication headphone with the electrically charging effect achieved by its battery module alone or by its externally connected power supply jack.

## Description

### BACKGROUND OF THE INVENTION

### Field of the invention

The present invention relates generally to a Bluetooth telecommunication headphone with a detachable battery module, and more particularly to a structurally bettered Bluetooth telecommunication headphone with a battery module that can be detached for electricity charging alone or fitted to the wireless headphone for charging electricity directly.

### Description of the prior art

The accustomed Bluetooth telecommunication headphone is a wireless headphone constructed by applying the Bluetooth telecommunication technology. Normally it comprises a wireless headphone structure with the essential electronic elements for a Bluetooth telecommunication module fitted inside and a battery module; also, a speaker of small size is externally mounted to the headphone structure that can be stuffed in the ear to receive messages via a Bluetooth telecommunication module. Nevertheless, the commonly seen battery module for Bluetooth telecommunication headphone is to use a type of rechargeable battery (such as the lithium battery or nickel-metal hydride battery, etc.) to be fitted inside the aforementioned headphone structure so that the electricity-charging effectiveness can be achievable by plugging a power supply device to the headphone structure when the electric energy has been depleted. The said rechargeable battery is retained in the interior of the headphone structure and it is unable for a user to detach at his own choice; apparently, the use of a Bluetooth telecommunication headphone is undoable while waiting for the completion of electricity charging and results in inconvenience to the user. The alternative method of a subsequently ameliorated Bluetooth telecommunication headphone in this regard is just to replace the rechargeable battery with the ordinary battery (such as the C-Zn battery or alkaline battery) with space provided in the headphone structure to receive the ordinary battery; thus, the user can change a new battery any time as desired to alleviate the inconvenience. Notwithstanding, the alternative design of using this kind of ordinary battery surely cannot obtain the effectiveness of reusing the electricity charging, economic cost is further burdened from its usage.

In light of the foregoing drawbacks and shortage with respect to the supply of electric energy constantly taken place to the conventional Bluetooth telecommunication headphone, the inventor of the present invention anxiously thought over how to make a correction and innovation and aggressively gave his best effort in research and development, the Bluetooth telecommunication headphone with detachable battery module in the present invention has been successfully developed in the long run.

### Description of the present invention

The primary objective of the present invention is to provide a Bluetooth telecommunication headphone with detachable battery module, wherein, a detachable battery module plus its design of assembly structure can be arbitrarily fitted to the structure of the Bluetooth telecommunication headphone to form an integrally shaped appearance so that the battery module can be detached for electricity charging alone or fitted to the wireless headphone for electricity charging directly. With the battery module incorporated, the modeling of appearance in an exquisite and beautiful structure for a Bluetooth telecommunication headphone is obtainable.

The foregoing objective of the present invention is attained by a wireless headphone of a Bluetooth telecommunication module and a battery module; wherein : the wireless headphone has a casing and the essential electronic elements for a Bluetooth communication module while there is a recessed slot for battery box with power supply contacts mounted inside constructed at a designated location on the casing, a jack constructed at a designated location on the casing and a power supply jack for hooking up an external power supply mounted on the casing or battery module; the battery module has a battery box mated with the slot-recessed battery box to receive a lithium battery plus contacts of power supply fitted at a selected location to be externally powered; thus, the said battery box to form the battery module can be embedded into the foregoing recessed slot of the battery box arbitrarily and combined with the casing to integrally form the Bluetooth telecommunication headphone with the electrically charging effect achieved by its battery module alone or by its externally connected power jack together with a more exquisite and beautiful appearance of the wireless headphone.

### Brief description of the figures

Figure 1 is a perspective view of the assembled Bluetooth telecommunication headphone according to the present invention;
Figure 2 is a perspective view of the disassembled Bluetooth telecommunication headphone according to the present invention;
Figure 3 is another perspective view of the assembled Bluetooth telecommunication headphone according to the present invention; and
Figure 4 is a side view of the assembled Bluetooth telecommunication headphone according to the present invention.

### Description of numberings for major components

| | |
|---|---|
| Wireless headphone | 1 |
| Battery module | 2 |
| Casing | 11 |
| Recessed slot of the battery box | 12 |
| Contacts of power supply | 13 |
| Jack of power supply | 14 |
| Speaker | 15 |
| Battery box | 21 |
| Rechargeable battery | 22 |
| Contacts of power supply | 23 |
| Jack for power supply | 24 |

### Detailed description of the preferred embodiments

A detailed description of the embodiments in accordance with the attached figures pertaining to the structural characteristics and other functions of the present invention are as follows :

Referring to the attached figures, the present invention relates generally to a Bluetooth telecommunication headphone with detachable battery module comprising a wireless headphone 1 of a Bluetooth telecommunication module and a battery module 2 as a provision for a user to put them on his ears and avail him to receive messages through the use of the Bluetooth telecommunication module.

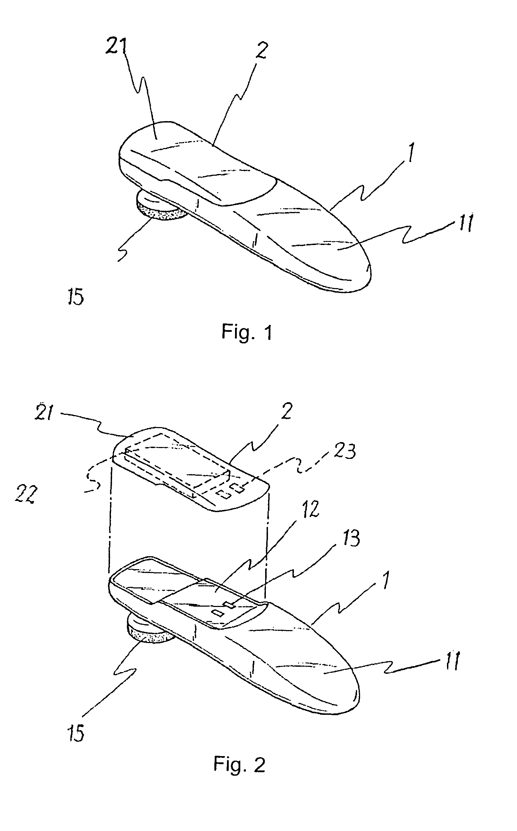

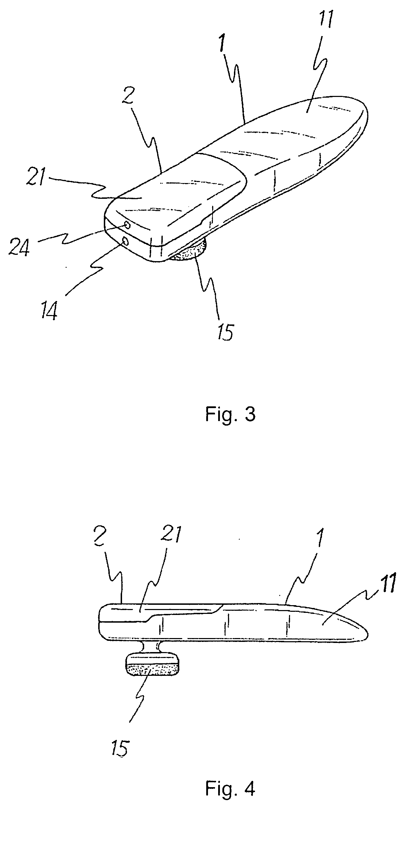

Referring from Figure 2 to Figure 4, the wireless headphone 1 comprises of a casing 11 with essential electronic elements for Bluetooth telecommunication module fitted inside (wireless Bluetooth telecommunication technology is well-known to everyone, further explanation is neglected), a recessed slot 12 for a battery box with power supply contacts 13 externally mounted is constructed at a designated location on the casing 11, a jack 14 provided at a designated location on casing 11 for hooking up an external power supply; and a speaker 15 to be connected to the Bluetooth telecommunication module; wherein, the recessed slot 12 for battery box as shown in Figure 2 can be either a recessed slot of open-type for the battery box or a recessed slot of another type for the battery box.

Referring from Figure 2 to Figure 4, the battery module 2 comprises an insulating battery box 21 mating with the slot-recessed battery box 12 to receive the rechargeable battery 22 (such as the lithium battery); also, there is a contact 23 of power supply externally fitted at a selected location on the bottom side of battery box 21 to be powered so that the said rechargeable battery 22 can be electrically connected to the contacts 23 of power supply; also, it can opt to mount an another power supply jack 24 at an appropriate location in battery box 21 separately to be charged the electricity from a power supply device.

With the foregoing structure configured, a battery module 2 is formed so that battery box 21 can be inlaid and fitted with the recessed slot 12 of the battery box in the wireless headphone 1 arbitrarily or detached and changed the Bluetooth telecommunication headphone; furthermore, the contacts 23 of power supply on the battery module 2 can be touched to energize the contacts 13 of power supply on the recessed slot 12 of the battery box when assembled in order to incorporate other electronic products (such as the mobile phone, computer or PDA, etc.) together to receive the messages emitted by other electronic products via the use of the said Bluetooth telecommunication module and transform the message into voice by speaker 15 as a provision for user to hear the message under a wireless state.

The use of the detachable battery module can further improve the structure of the Bluetooth telecommunication headphone because the battery module 2 has a structure of the battery box 21 that matches with the recessed slot 12 of the battery box in the wireless headphone 1, that is, under a state of assembled battery module 2, the battery box 21 and the casing 11 of wireless headphone can be combined together to form an integral structure, that is the reason why an exquisite and beautiful appearance of the Bluetooth telecommunication headphone is attainable. In particular, the present invention is to take the advantage of the structural design of the battery box 21 on the battery module 2 so that user can conveniently and promptly detach the battery module 2, replace it with a an identical battery module with saturated electricity when the electric energy has been depleted and charge electricity to the detached module 2 alone. Thus, the effectiveness by using the Bluetooth telecommunication headphone without interruption is achievable while the commonly known problem of waiting for the electricity to charge the Bluetooth telecommunication headphone is corrected; also, the cost concerned for the ordinary battery that cannot be rechargeable is solved. Since the jack 14 of power supply fitted to the casing 11 in the wireless headphone, or the power supply jack 24 mounted in battery module 2 in the present invention can offer an option of direct charging of electricity (plug to connect the power supply device) as well when battery module 2 is mounted to the wireless headphone 1, therefore, a pragmatic benefit is at user's choice.

As synthetically concluded from the foregoing descriptions, the Bluetooth telecommunication headphone with detachable battery module in the present invention truly has its practicality and innovation, and its measures of application are originated from novelty without doubt with the effectiveness in line with the objective of design. Thus, it is rational to claim that the progress is noticeable; an application of patent is filed in accordance with the Law accordingly.

## Claims

1. A Bluetooth telecommunication headphone with detachable battery module, comprising :
a wireless headphone, which comprises a casing with the essential electronic elements for a Bluetooth telecommunication module fitted inside and a recessed slot of an open-type battery box constructed at a designated location in conjunction with a speaker connected to the Bluetooth telecommunication module;
a battery module, which includes an insulating battery box mated with the slot-recessed battery box to receive a rechargeable battery;
thus, the said battery module can be embedded into the recessed slot of the battery box and combined with the casing to integrally form the Bluetooth telecommunication headphone.

2. A Bluetooth telecommunication headphone with detachable battery module as claimed in Claim 1, wherein, there are external contacts of power supply fitted at the recessed slot of the battery box that can be electrically connected to the battery box in the battery module.

3. A Bluetooth telecommunication headphone with detachable battery module as claimed in Claim 1, wherein, there are external contacts of power supply fitted at a selected location on the bottom side of the battery box to be externally powered so that the rechargeable battery can be electrically connected to the contacts of power supply.

4. A Bluetooth telecommunication headphone with detachable battery module as claimed in Claim 1, wherein, the rechargeable battery is a lithium battery.

5. A Bluetooth telecommunication headphone with detachable battery module as claimed in Claim 1, wherein, a power supply jack for external power connection is mounted at a designated location on the casing of the wireless headphone while a separate power supply jack for external power connection is fitted at a selected location on the battery box of the battery module.
